Europäisches Patentamt

European Patent Office

Office européen des brevets

(11) Veröffentlichungsnummer: **0 419 829 A2**

# (12) EUROPÄISCHE PATENTANMELDUNG

(21) Anmeldenummer: 90115616.6

(22) Anmeldetag: 16.08.90

(51) Int. Cl.5: **B29C 45/16**

(30) Priorität: 26.09.89 DE 3932047

(43) Veröffentlichungstag der Anmeldung:
03.04.91 Patentblatt 91/14

(84) Benannte Vertragsstaaten:
AT CH FR GB IT LI NL

(71) Anmelder: **Klöckner Ferromatik Desma GmbH**
**Riegeler Strasse 4**
**W-7831 Malterdingen(DE)**

(72) Erfinder: **Pfaff, Adolf**
**Sonnhalde 4**
**W 7809 Kollnau(DE)**
Erfinder: **Schrammel, Werner**
**Rothalde 17**
**W-7830 Emmendingen(DE)**
Erfinder: **Thoma, Herbert, Dipl.-Ing.**
**Schwarzwaldstrasse 5**
**W-7832 Kenzingen(DE)**
Erfinder: **Nesch, Wolfgang**
**In der Waldstrasse 82**
**W-7630 Lahr-Sulz(DE)**

(74) Vertreter: **Kiefer, Winfried, Dipl.-Phys.**
**Klöckner-Werke Aktiengesellschaft**
**Patentabteilung Klöcknerstrasse 29**
**W-4100 Duisburg 1(DE)**

(54) Verfahren und Vorrichtung zum Herstellen von Behältern für Lebensmittel u.dgl.

(57) Behälter für Lebensmittel u. dgl., die mehrere Schichten aus thermoplastischem Kunststoffmaterial aufweisen, deren Innenwandung und deren Außenwandung eine in sich geschlossene äußere Hülle aus nur einem thermoplastischen Kunststoffmaterial und die weiteren, mindestens eine Kleber- und/oder Sperrschicht aufweisenden Schichten einen Kern mit mindestens einer in sich geschlossenen Hülle bilden, werden in der Weise hergestellt, daß das thermoplastische Kunststoffmaterial für die Schichten plastifiziert und ein plastIfizierter Massestrang mit koaxialem Schichtaüfbau gebildet wird. Zu Beginn der Einspritzphase eilt das die äußere Hülle bildende thermoplastische Kunststoffmaterial des plastifizierten Massestrangs dem thermoplastischem Kunststoffmaterial für die zu bildende Hülle des Kerns und dieses dem plastifizierten Material des Kerns vor. Gegen Ende der Einspritzphase eilt das die äußere Hülle bildende thermoplastische Kunststoffmaterial dem thermoplastischen Kunststoffmaterial der zu bildenden Hülle des Kerns und dieses dem thermoplastischen Kunststoffmaterial für den Kern nach.

EP 0 419 829 A2

Die Erfindung betrifft ein verfahren zum Herstellen von Behältern für Lebensmittel u. dgl., wobei die Behälter mehrere Schichten aus thermoplastischem Material aufweisen, die Innenwandung und die Außenwandung eine in sich geschlossene äußere Hülle aus nur einem thermoplatischen Material und die weiteren mindestens eine Kleberschicht und/oder eine Sperrschicht aufweisenden Schichten einen Kern mit mindestens einer in sich geschlossenen Hülle bilden, sowie eine Vorrichtung zum Durchführen des Verfahrens.

Im Rahmen der Erfindung sind unter Behältern Behälter für Lebensmittel, Arzneimittel sowie kosmetische Präparate, allgemein Behälter für feste, flüssige und gegebenenfalls in einer wässrigen Lösung vorliegende Stoffe zu verstehen, die dem menschlichen und/oder dem tierischen Körper in corpore zugeführt werden oder zur äußeren Anwendung kommen.

Behälter für diese Zwecke müssen eine hinreichende mechanische Stabilität aufweisen, damit sie sicher transportiert werden können und weiterhin auch zu größeren auf Paletten angeordneten Gebinden mit entsprechender Stapelhöhe zusammengefaßt werden können.

Weiterhin wird gefordert, daß das thermoplastische Kunststoffmaterial der Behälter an Lebensmittel keine Weichmacher oder dergleichen abgibt. Es muß auch sichergestellt sein, daß in die in den Behältern oft auch eingesiegelten Lebensmittel Sauerstoff nicht diffundieren kann, der die Mindesthaltbarkeit erheblich herabsetzen könnte, weiterhin muß auch unterbunden sein, Baß aus den Lebensmitteln keine Aromastoffe in das Material des Behälters und nach außen diffundieren. Weiterhin muß sichergestellt sein, daß die Diffusion von Wasser bzw. Wasserdampf durch die Behälterwand nach beiden Richtungen sicher unterbunden ist. Entsprechendes gilt auch für Kosmetika, pharmazeutische Präparate usw.

Da kein thermoplastisches Kunststoffmaterial für Lebensmittel, Kosmetika, pharmazeutische Präparate oder dergleichen sämtliche oder auch nur mehrere dieser Forderungen gleichzeitig erfüllen kann, bestehen die Behälter aus mehreren Schichten, wobei allgemein die Schichten, die eine Diffusion von Sauerstoff, Wasser bzw. Wasserdampf, UV-Licht u. dgl. unterbinden als Barriereschichten bzw. Sperrschichten

Da es im allgemeinen auch nicht möglich ist, beliebige dieser Schichten an ihren Grenzflächen dauerhaft miteinander zu verbinden, ist es erforderlich, zwischen diesen Schichten weitere Schichten vorzusehen, die mit den angrenzenden Schichten einen festen und dauerhaften Verbund bilden. Derartige Schichten werden allgemein als Kleberschichten und das thermoplastische Material für diese Schichten als Haftvermittler bezeichnet. Insgesamt können die Behälter bis zu zehn und mehr Schichten aufweisen und haben eine Wanddicke von einigen Zehntel Millimetern bis höchstens 1 bis 2 Millimeter.

Da das Material für diese Barriere- und Sperrschichten sehr teuer ist, ist man bestrebt, die Dicke der Barriere- und Kleberschichten möglichst gering zu halten. Sie betragen im allgemeinen einige Mikron (einige tausendstel Millimeter), damit preislich günstige Behälter hergestellt werden können. Auch die übrigen Schichten werden so dünn wie möglich gewählt, da die Behälter nach ihrem Gebrauch entsorgt wer den und im allgemeinen eine Wiederaufbereitung (Recycling) unwirtschaftlich wäre.

Im allgemeinen werden die Behälter aus mittels Breitschlitzdüsen extrudierten mehrschichtigen Folienbahnen hergestellt und unter Bildung des sogenannten Gitters tiefgezogen und ausgestanzt.

Unwirtschaftlich ist der relativ hohe Anteil des anfallenden Gitters an den Folienbahnen, wobei insbesondsere der hohe Einkaufspreis des thermoplastischen Kunststoffmaterials für einzelne Barriere- und Kleberschichten ins Gewicht fällt. Aus diesem Grunde wird das Gitter (scrab) zerkleinert, plastifiziert und zu Schichten im für die Lebensmittel usw. unkritischen Bereich von Folienbahnen verarbeitet.

Beim Tiefziehen werden den Behältern Spannungen eingeprägt, die zum Verwerfen der Behälter führen können, wenn sie beispielsweise vor dem Einfüllen von Lebensmitteln mit Heißluft oder Wasserdampf sterilisiert werden.

Es ist weiterhin bekannt (EP 0307 058, EP 0311 161, EP 0306 118) auf Spritzgießmaschinen Vorformlinge zu spritzen, die im Prinzip an dem einen Ende durch eine Kugelkalotte abgeschlossene Hohlzylinder mit einem zur Achse symmetrischen Schichtaufbau aus verschiedenem thermoplastischem Material sind.

Die einzelnen Schichten der Vorformlinge haben Dicken von mehreren Zehntel Millimetern. In Streckblasmaschinen Blasformmaschinen werden anschließend die Vorformlinge auf die endgültige Gestalt der Behälter gebracht. Durch das Blasformen entstehen Schichtdicken, die in der Größenordnung von einigen Mikrometern wie bei den tiefgezogenen Behältern liegen. Ein besonderer Vorteil besteht darin, daß die durch das kombinierte Spritzgießen und Streckblasen hergestellten Behälter frei von Eigenspannungen sind, so daß ein Sterilisieren problemlos ist.

Nachteilig ist der hohe maschinelle Aufwand, der erst bei hohen Stückzahlen eine wirtschaftliche Fertigung zuläßt.

Zum Herstellen der Vorformlinge kommen Spritzgießmaschinen zum Einsatz (EP 0307 058), die mehrere Plastifizier- und Einspritzaggregate zum Plastifizieren des als Granulat vorliegenden thermoplastischen Kunststoffmaterials für die einzelnen Schichten aufweisen.

Das plastifizierte thermoplastische Material für die einzelnen Schichten wird in Masseesträngen einer Düse zugeführt, in der koaxial zu einer zentralen Bohrung Ringräume ausgebildet sind.

Dieser zentralen Bohrung und den Ringräumen werden in der Reihenfolge der Schichten der zu spritzenden Vorformlinge die einzelnen Massestränge unter Bildung eines plastifizierten geschichteten Massestranges zugeführt, der dann in die Spritzgießform eingespritzt wird.

Hierbei wird von der Eigenschaft der plastifizierten Massestränge Gebrauch gemacht, daß sie aufeinander ohne Reibung und ohne sich gegenseitig zu durchdringen, gleiten. Die einen Massestränge bilden gleichsam Schmiermittelfilme für die anderen Massestränge.

Es ist bekannt (PCT US 80/00678) zur Steuerung der Düsen Mikroprozessoren einzusetzen.

Es ist auch bekannt (US-PS 339 240) aus mehreren Schichten z.B. aus zwei Schichten bestehende Behälter nach dem sogenannten Mehrkomponentenspritzen auf Spritzgießmaschinen zu spritzen. Ein zum Beispiel aus zwei verschiedenen thermoplastischen Materialien bestehender becherförmiger Behälter ist nach Art von zwei ineinander angeordneten be cherförmigen Behältern aufgebaut. Der geschichtete Aufbau läuft in den Rand aus und setzt sich in dem Anguß fort. Die zum Einsatz kommenden Plastifizier- und Einspritzaggregate weisen mehrere Plastifizierschnecken auf, die in der Düse über Ringkanäle das plastifizierte Kunststoffmaterial für die einzelnen Schichten zu dem geschichteten plastifizierten Massestrang übereinanderführen.

Die Snnenschicht besteht beispielsweise aus einem geschäumten Polystyrol, das eine hohe Erweichungstemperatur hat, so daß in den Becher auch heisse Getränke eingefüllt werden, während die Außenschicht aus stoßfestem Polystyrol besteht, das eine hohe mechanische Festigkeit gegen Stöße, Schläge und dgl. aufweist.

Dieses Spritzgießen von mehrschichtigen dickwandigen Behältern wird als Mehrkomponentenspritzen bezeichnet.

Es ist weiterhin bekannt (DE-PS 22 47 995) nach dem Mehrkomponentenspritzen Kunststoffformkörper herzustellen, die eine in sich geschlossene Außenhülle aus einem thermoplastischen Kunststoffmaterial und einen Kern aus einem anderen thermoplastischen Kunststoffmaterial aufweisen. Der Kern ist ringförmig ausgebildet und vollständig in das Material für die Außenhülle eingebettet.

Aus den beiden plastif izierten Kunststoffmaterialien wird ein geschichteter plastifizierter Massestrang mit einem im Querschnitt koaxial geschichteten Aufbau gebildet. Der zentrale Strang und die äußere koaxiale Schicht bestehen aus dem Kunststoffmaterial für die Außenhülle. Zwischen ihnen ist eine Zwischenschicht aus dem zweiten plastifizierten Kunststoffmaterial für den Kern angeordnet.

Dieser geschichtete Massestrang wird in eine Spritzgießform derart eingespritzt, daß jeweils am Ende eines Spritzzyklus die Angußbohrung der Spritzgießform ein Pfropfen aus dem Material für die Außenhülle aufweist und zu Beginn des nächsten Einspritzvorgangs zunächst der Pfropf en auf die der Angußbohrung gegenüberliegende Wandung des Formnestes gelangt, durch weitere Materialzufuhr der zentrale Massestrang gewissermaßen als Seele aufrechterhalten bleibt, und daß gegen Ende der Einspritzphase die Angußbohrung nur plastifiziertes Kunststoffmaterial der Außenhülle aufweist.

Es ist weiterhin bekannt (CH-PS 528 359) Spritzgußteile nach dem Mehrkomponentenverfahren zu spritzen, die eine geschlossene Oberfläche und einen porigen Kern aufweisen. Durch eine entsprechende Steuerung des geschichteten plastifizierten Massestrangs wird zu Beginn des Einspritzvorgangs plastifiziertes Material für die Außenhülle in die Spritzgießform eingespritzt, anschließend sowohl plastifiziertes Material für die Außenhülle und plastifiziertes Material für den Kern, und gegen Ende der Einspritzphase nur noch plastifiziertes Material für, die Hüll, wobei ein Propfen aus Material für die Hülle in der Angußbohrung gebildet wird.

Es ist weiterhin bekannt (Kunststoffe 75, 1985, Heft 3, Seite 147 ff) nach dem Mehrkomponentenspritzgießen Gehäuse mit einer Außenhaut und einem gegebenfalls geschäumten Kern für elektronische Geräte herzustellen, die als dünnwandige Formteile eine Wandstärke bis etwa 1 mm aufweisen können, während Gehäuse mit einer Abschirmung eine Wandstärke von etwa 3 mm aufweisen. Als Kernmaterial wird beispielsweise ein Materialgemisch aus PC und ABS mit 40 Gewichtsprozent Aluminiumflocken verwendet.

Es ist in diesem Zusammenhang darauf hingewiesen, daß dünnwandige Formteile mit einer Wandstärke bis herab zu 1 mm zwar erheblich höhere Werkzeuginnendrücke als Spritzgußteile mit größerer Wandstärke erfordern, daß jedoch die Wahrscheinlichkeit für ein Hindurchtreten des Kernmaterials durch das Material der Außenhaut geringer sei als bei Spritzgußteilen mit größerer Wandstärke.

Die Wandstärken der durch das Mehrkomponentenspritzen hergestellten Spritzgußteile - in der Praxis wird es im allgemeinen nur mit zwei unterschiedlichen thermoplastischen Kunststof fmaterialien durchgeführt - weisen Wandstärken auf, die oberhalb von einigen Millimetern liegen.

Die auf dem Gebiet des Mehrkomponentenspritzens mit dünn bezeichneten Wandstärken bzw. Schichtdicken sind jedoch mit den Schichtdicken tiefgezogener bzw. durch Blasformen hergestellter Behälter nicht vergleichbar, deren Schichtdicken einige Mikron betragen und die im allgemeinen bis zu zehn und mehr Schichten aufweisen können.

Es ist ohne weiteres verständlich, daß nach dem Mehrkomponenten-Spritzgießen hergestellte Behälter mit zehn und mehr Schichten eine enorme Wandstärke hätten, die im Hinblick auf die Stabilität nicht erforderlich wäre, und daß solche Behälter wegen des hohen Materialverbrauchs zu teuer wären und im Hinblick auf die Entsorgung bzw. Beseitigung weitere Probleme verursachen würden.

Der Erfindung liegt die Aufgabe zugrunde, ein Verfahren zum Herstellen von Behältern für Lebensmittel o. dgl. zu schaffen, wobei die Behälter aus mehreren Schichten austhermoplastischem Material bestehen, die Innenwandung und die Außenwandung eine in sich geschlossene äußere Hülle aus nur einem thermoplastischen Material und die weiteren, mindestens eine Kleberschicht und/oder Sperrschicht aufweisenden Schichten einen Kern mit mindestens einer in sich geschlossenen Hülle bilden und die Dicke einzelner Schichten im Bereich von maximal einigen Mikron liegt.

Diese Auf gabe wird erfindungsgemäß dadurch gelöst, daß das thermoplastische Material für die Schichten plastifiziert und ein plastifizierter Massestrang fit koaxialen Schichtaufbau gebildet wird, daß zu Beginn der Einspritzphase das plastifizierte thermoplastische Material für die äußere Hülle dem plastifizierten thermoplastischen Material für die Hülle des Kerns und das plastifizierte thermoplastische Material für die Hülle des Kerns dem plastifizierten thermoplastischen Material für den Kern voreilt und daß gegen Ende der Einspritzphase das plastifizierte thermoplastische Material für die äußere Hülle dem plastifizierten thermoplastischen Material für die Hülle des Kerns und das plastifizierte thermoplastische Material für die Hülle des Kerns dem plastifizierten thermoplastischen Material für den Kern nacheilt

Es zeigte sich, daß beim erfindungsgemäßen Herstellen dünnwandiger Behälter mit mehrschichtigem Aufbau, die bisher durch Tiefziehen oder durch Spritzgießen von Vorformlingen und anschließendem Streckblasen hergestellt wurden, extrem dünne und zusammenhängende Schichten von einigen Mikron Dicke erreichbar sind.

Überraschend ist weiterhin, der Aufbau aus in sich geschlossenen Schichten.

Überraschend ist weiterhin, daß beim erfindungsgemäßen Herstellen von dünnwandigen Behältern mit mehrschichtigem Aufbau, die bisher durch Tiefziehen oder durch Spritzgießen von Vorformlingen und anschließendem Blasformen der Vorformlinge hergestellt wurden, extrem dünne und zusammenhängende Schichten bis einige Mikron Dicke sicher hergestellt werden können, die vollständig in das Material der anderen Schichten eingebettet sind.

Der erfindungsgemäß erzielte Schichtaufbau ist in sich geschlossen und entspricht im Modell einer Kugel, die aus mehreren in sich geschlossenen Kugelschalen besteht, deren innerste Kugelschale einen kugelförmigen Zentralkern von entsprechend geringem Durchmesser als die Kugel vollständig umgibt.

Im Sinne der Erfindung entspricht die äußere Kugelschale die äußere Hülle, während die von ihr umhüllte nächste Kugelschale der geschlossenen Hülle des Kerns entspricht, die mit den weiteren Kugelschalen und dem kugelförmigen Zentralkern den geschichteten Kern aus in sich geschlossenen Schichten bildet.

Zu bemerken ist weiterhin, daß die Aufeinanderfolge der einzelnen Schichten des erfindungsgemäß hergestellten Behälters nicht von einer entsprechenden Aufeinanderfolge der Schichten des koaxial geschichteten plastifizierten Materials entspricht. Vielmehr kommt es darauf an, daß z.B. das plastifizierte Kunststoffmaterial der in sich geschlossenen und die weiteren Schichten einhüllenden Schicht die Außenwand und Innenwand des Behälters bildet, beim Spritzen dem plastifizierten Material für die weiteren Schichten, diesem zu Beginn voreilt und gegen Ende nacheilt. Gleiches gilt für die weiteren Schichten zueinander.

Vermutlich gelangt unterhalb einer Mindestdikke der Behälter, die dem Abstand der zueinander zeigenden Innenwandungen des Formnestes der eingesetzten Spritzgießformen entspricht, das plastifizierte Kunststoffmaterial der ersten voreilenden Komponente auf die beiden zueinander zeigenden Innenwandungen des Formnestes und erstarrt in infinitesimaler Schichtdicke auf den Innenwandungen und kleidet sich mit einer zusammenhängenden Schicht aus, während die nächste voreilende plastifizierte thermoplastische Komponente zwischen die beiden infinitesimalen Schichten auf den Innenwandungen gelangt eine Quellströmung an der Front der ersten Komponente aus, wobei für die zweite Komponente in Bezug auf die dritte Komponente das gleiche gilt. Entsprechendes gilt für die weiteren Komponenten zueinander. Wesentlich ist, daß entsprechend das plastifizierte Material der ersten zu Beginn des Einspritzvorgangs voreilenden Komponenten allen folgenden nacheilt. Entsprechendes gilt für die zweite, dritte usw. Komponente.

Überraschend war weiterhin, daß die einzelnen Schichten auch bei kleinen Dicken von nur einigen Mikron weder ein reißen noch durch angrenzende Materialschichten durchbrochen werden, so daß einwandfreie Behälter mit einem vorgegebenen geschichteten Aufbau hergestellt werden.

In einer weiteren Ausgestaltung der Erfindung wird die Dicke der zu bildenden in sich geschlossenen äußeren Hülle mittels des Massedurchsatzes des plastifizierten Materials für die äußere Hülle umd mittels des massedurchsatzes für den Kern gesteuert.

Der Massedurchsatz des Materials für die einzelnen Schichten kann z.B. auf die durch den lichten Querschnitt der Angußbohrung der Spritzgießform bezogen werden und ist experimentell bestimmbar, indem die Wandstärke der einzelnen koaxialen Schichten der aus der Angußbohrung entnommenen Angüsse nach dem jeweiligen Einspritzvorgang gemessen werden.

In einer noch weiteren Ausgestaltung der Erfindung erfolgt die Änderung des Massedurchsatzes für die äußere Hülle und die Änderung des Massedurchsatzes für den Kern durch die Steuerung der Spritzgeschwindigkeiten

In einer noch weiteren Ausgestaltung der Erfindung bildet zur Erzeugung einer im wesentlichen gleichen Wandstärke der äußeren Hülle im Bereich der Innenwandung und im Bereich der außenwandung das plastifizierte thermoplastische Kunststoffmaterial für die äußere Hülle die äußere Schicht des koaxial gerichteten Massestranges.

Es zeigte sich nämlich, daß bei dieser Anordnung die Schichtdicke im wesentlichen gleich ist.

In einer noch weiteren Ausgestaltung der Erfindung bildet zur Erzeugung einer dickeren Wandstärke der Innenwandung des Behälters im Vergleich zu seiner Außenwandung, die von der äußeren Hülle gebildet werden, das plastifizierte thermoplastische Kunststoffmaterial für die äußere Hülle den axialen Strang des koaxial geschichteten Massestranges.

Es zeigte sich überraschenderweise, daß durch diese Aufeinanderfolge der Massestränge des axial geschichteten Massestranges diese unterschiedliche Dicke im Bereich der Innenwandung und im Bereich der Außenwandung sich einstellt, so daß es ohne weiteres möglich ist, durch diese Maßnahmen die äußere Schicht des koaxial geschichteten Massestranges bzw. für den zentralen Massestrang (Kern) das thermoplastische Material für die äußere Hülle zu wählen, so daß es ohne weiteres möglich ist, je nach den geforderten Bedingungen die Barriereschichten bzw. Sperrschichten des geschichteten Kerns mehr in Richtung zur Innenwandung bzw. mehr in Richtung zur Außenwandung des Behälters zu verlegen.

In einer noch weiteren Ausgestaltung der Erfindung erfolgt die Aufeinanderfolge der in sich geschlossenen Schichten durch die Vorgabe der Reihenfolge der zu Beginn der Einspritzphase zueinander voreilenden Masseströme und gegen Ende der Einspritzphase zueinander nacheilenden Masseströme des geschichteten Massestranges mit dem koaxialen Schichtaufbau.

Die Vorrichtung zur Durchführung des Verfahrens, die eine Düse mit einer axialen Bohrung und koaxiale Ringräume aufweist, ist erfindungsgemäß dadurch gekennzeichnet, daß sie eine Einrichtung zur Änderung der Aufeinanderfolge der einzelnen Ströme des geschichteten Massestranges aufweist. Durch diese Einrichtung zur Änderung der Aufeinanderfolge ist es möglich, das plastifizierte thermoplastische Material für die äußere Hülle in den zentralen Strang bzw. in die äußere Schicht des koaxial geschichteten Massestranges zu verlegen.

Weiterhin weist die Vorrichtung erfindungsgemäß eine Schalteinrichtung auf, die die Aufeinanderfolge und die Zeit der Voreilung der Masseströme zueinander sowie gegen ende der Einspritzphase die Nacheilung der einzelnen Masseströme steuert.

Die Erfindung ist in der Zeichnung anhand von Ausführungsbeispielen erläutert.

Es zeigen:

Fig. 1 schematisch im Schnitt eine Spritzgießform mit einem gespritzten Behälter vor dem Ausformen,

Fig. 2a-d in der Darstellung der Fig. 1 und im Ausschnitt dem vermutlichen zeitlichen Ablauf des Spritzgießens des Behälters, woßei die Spritzgießform weggelassen ist,

Fig. 3 das Spritzgießen eines Behälters nach Figur 1 mit einer dickeren Innenwandung als Außenwandung und

Fig. 4 schematisch einen Schnitt durch eine Düse mit einer Umschalteinrichtung für die Massenströme.

Die Erfindung ist anhand eines aus drei Masseströmen axial geschichteten Massestromes und einer entsprechenden Düse erläutert.

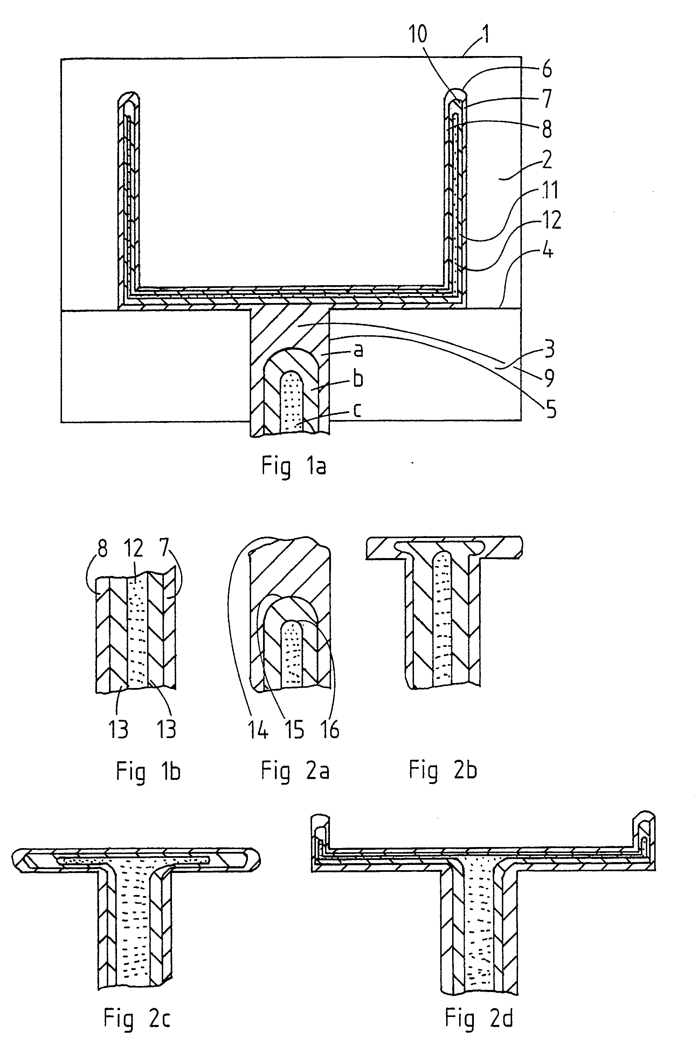

Die Figur 1 zeigt schematisch und in Schnitt eine Spritzgießform mit einem bereits hergestellten mehrschichtigen Behälter vor dem Ausformen.

Die Spritzgießform ist mit 1 bezeichnet und besteht in an sich bekannter Weise aus den beiden Formhälften 2 und 3 mit der Formtrennebene 4 und der Angußbohrung 5, in der sich der Anguß nach dem Herstellen des in der Spritzgießform noch befindlichen Behälters 6 angeordnet ist.

Der Behälter 6 besteht aus der Außenwandung 7 und der Innenwandung 8, die beide eine in sich geschlossene Hülle aus dem gleichen, mit a bezeichneten thermoplastischen Material bilden, das im Bereich der Trennebene und in Richtung zur nicht dargestellten Düse den gesamten Querschnitt der Angußbohrung ausfüllt und einen homogenen Abschnitt des Angusses 9 bildet.

Diese äußere in sich geschlossene Hülle umfaßt den geschichteten Kern 10, der aus der ebenfalls in sich geschlossenen Hülle 11 und einer inneren Schicht 12 besteht.

Die innere Schicht 12 ist beidseitig von der in sich geschlossenen Hülle 11 umgeben, so daß der Behälter in einem Schnitt senkrecht zu der Linie I-I einen fünfschichtigen Aufbau aufweist, wobei die Schichten symmetrisch zu der Schicht 12 angeordnet sind.

Die Hülle 11 besteht aus dem thermoplastischen Material b, die innere Schicht aus dem thermoplastischen Material c.

Diese thermoplastischen Materialien a, b und c bilden in der Angußbohrung, wie aus Figur 1 ersichtlich unterhalb des homogenen Abschnittes des Angusses, den plastifizierten Massenstrang mit koaxialem Schichtaufbau, aus dem der Behälter gespritzt wurde.

Nach Öffnen der Spritzgießform und Entformen des Behälters, wobei gleichzeitig der Anguß in der Formtrennebene 4 entfernt wird, weist der fertige Behälter eine Standfläche auf, die durch die Ebene der Trennfläche definiert ist.

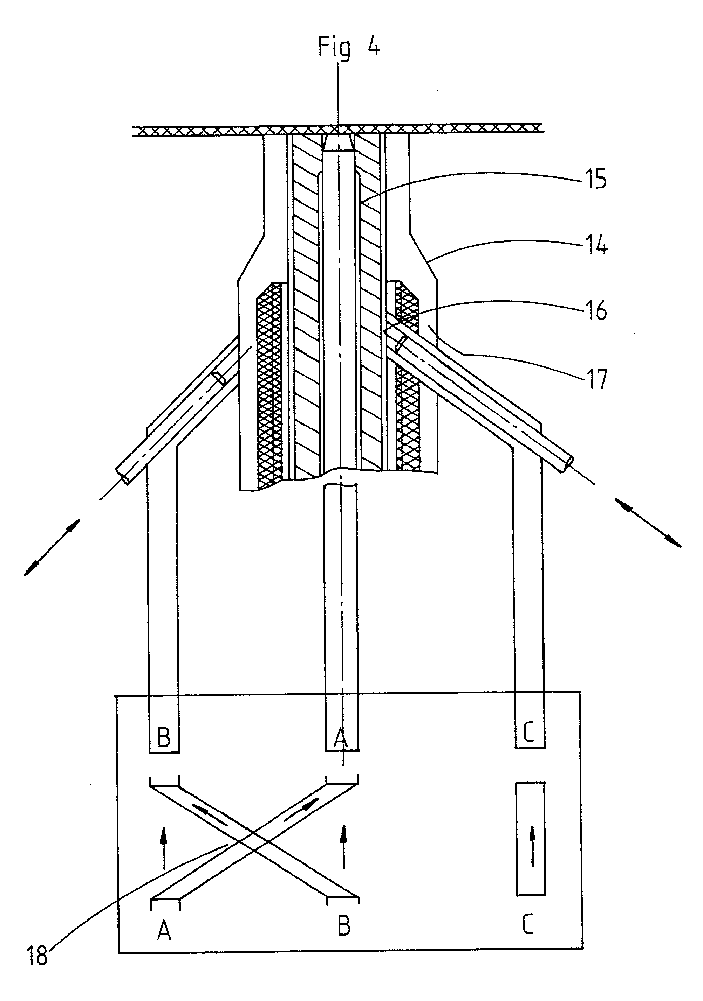

Das thermoplastische Kunststoffmaterial a bzw. b bzw. c wird in an sich bekannter Weise mit jeweils einem an sich bekannten Plastifizier- und Einspritzaggregat plastifiziert und dann einer an sich bekannten, in Figur 4 im Schnitt schematisch dargestellten Düse zugeführt, in der der pla stifizierte Massestrang mit koaxialem Schichtaufbau gebildet wird.

Figur 2 zeigt den Massestrang im Bereich der Angußbohrung, wobei aus Figur 1 weiterhin ersichtlich ist, daß gegen Ende der Einspritzphase das plastifizierte Material a dem plastifizierten Material b und das plastifizierte Material c nachgeeilt ist, so daß die aus Figur 1 ersichtlichen Fronten 14 bzw. 15 bzw. 16 der einzelnen koaxialen Schichten gebildet wurden, wobei das Material a vor der Front des Materials b den gesamten Querschnitt der Angußbohrung ausfüllt.

Die Figuren 2 a bis 2 d zeigen in der Darstellung der Figur 1 unter Weglassung der Spritzgießform den plastifizierten Massestrang in der Angußbohrung und oberhalb der Formtrennebene während des Einspritzens des Massestrangs zur -, - = - Bildung des Behälters.

In Figur 2a ist der bereits gespritzte Behälter entformt, so daß die Front in der Formtrennebene verläuft. Figur 2a ist mit Figur 1 insoweit identisch als sie den plastifizierten Massestrang betrifft. Zu Beginn der Einspritzphase eilt, wie aus den Figuren 2 a bis 2 d ersichtlich, das Material a den beiden anderen thermoplastischen Materialien vor, gelangt in das Formnest für den zu bildenden Behälter, füllt wie aus Figur 2 b ersichtlich senkrecht zur Bewegungsrichtung den gesamten Querschnitt des Formnestes im Bereich der Angußbohrung aus, und strömt wie aus den weiteren Figuren 2 c und 2 d ersichtlich, entlang der gegenüberliegenden Innenwände des Formnestes unter Ausfüllung des gesamten Formnestes weiter, wobei gleichzeitig oder verzögert das Material der Schichten b und c in das Formnest eingespritzt werden.

Hierbei bilden vermutlich die infinitesimal dünnen Schichten des Materials a an den Formwänden sozusagen Formwände für das Material b (vgl. Figur 2 c), wobei sich an der Stirnfläche des Materials a eine Quellströmung ausbildet und gleichzeitig weiteres thermoplastisches Material a und b weiter eingespritzt wird, wobei dann für das Material c, wobei die an die Wandung des Formnestes anliegenden Schichten des Materials a gewissermaßen die Wandung eines Formnestes für das Material b und entsprechend, wie aus Figur 2 d ersichtlich, die an den Schichten a anliegenden Schichten des Materials b ebenfalls die "Wandung" eines "Formnestes" für das Material c bilden, und an den Stirnflächen sich eine Quellströmung bildet, mit dem Ergebnis, daß unter Ausfüllung der Form ein Spritzgußteil gespritzt wird, daß einen geschichteten Aufbau aus an sich geschlossenen Schichten aufweist.

Gegen Ende des Einspritzvorgangs bzw. der Einspritzphase werden die Masseströme so gesteuert, daß das Material des Massestroms a dem Material des Massestroms b und das Material des Massestroms b dem Material des Massestroms c nacheilt, so daß der aus Figur 1 ersichtliche Anguß am gespritzten Spritzgußteil gebildet wird.

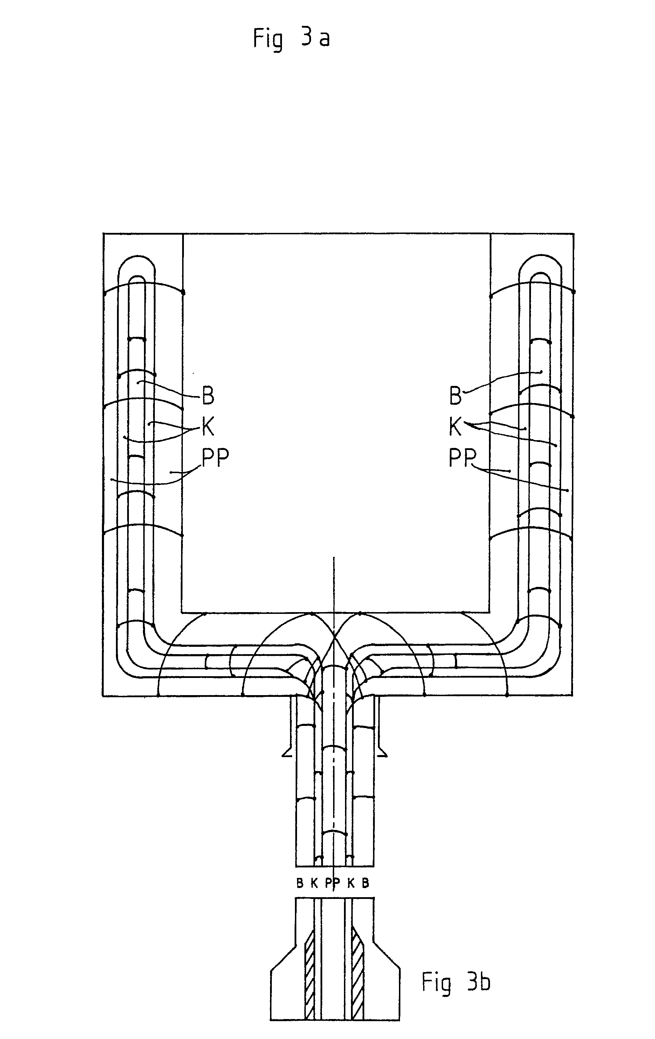

Die Figur 3 a zeigt in der Darstellung der Figur 1 das Spritzen eines Bechers, bei dem die Innenwandung dicker ist als die Außenwandung. Die Figur 3 b zeigt schematisch einen Schnitt durch die Düse mit dem geschichteten Massestrom, der in der Weise aufgebaut ist, daß das Material der Schicht a den zentralen Strang bildet, und das Material b die äußere Schicht und das Material c die Zwischenschicht zwischen dem zentralen Strang und der äußeren Schicht.

Wie bereits einleitend erwähnt, zeigte es sich überraschenderweise, daß die Aufeinanderfolge der Schichten des geschichteten Massestrangs nicht die Aufeinanderfolge der Schichten des fertigen Spritzgußteils bestimmen, sondern daß es vielmehr darauf ankommt, in welcher Folge die Schichten des plastifizierten geschichteten Massestroms zu Beginn des Einspritzvorgangs zueinander voreilen und gegen Ende des Einspritzvorgangs zueinander nacheilen.

Dies ist aus Figur 3 ersichtlich, gemäß der der Massestrom des Materials a ebenfalls wie in den Figuren 2 zu Beginn des Einspritzvorgangs voreilt, zunächst im Bereich der Angußbohrung den gesamten Querschnitt des Formnestes senkrecht zur Strömungsrichtung ausfüllt, wobei dann beim weiteren Einspritzen des geschichteten Massestroms die Schichten b und c ebenfalls in die Spritzgießform eingespritzt werden, ebenfalls zur Achse des Bechers bzw. zur Achse die Angußbohrung ein rotationssymmetrischer Aufßau der einzelnen Schichten erzielt wird, jedoch die innere Schicht dicker ist als die äußere Schicht.

Bei Beendigung der Einspritzphase wird wie in den Figuren 2 der plastifizierte geschichtete Massestrom derart gesteuert, daß das Material a gegenüber dem Material b und das Material b gegenüber dem Material c nacheilt so, daß wiederum ein Spritzgußteil mit geschichteten Aufbau hergestellt ist, dessen einzelne Schichten in sich geschlossen sind.

Die Aufeinanderfolge der Schichten des plastifi-zierten koaxial geschichteten Massenstromes be-einflußt somit die Dicke der einzelnen Schichten (vgl. Fig. 1b)

Die Figur 4 zeigt im axialen Schnitt und in schematischer Darstellung eine Düse 14, die in an sich bekannter Weise so ausgebildet ist, daß zum Aufbau des geschichteten Massestroms eine zentrale Bohrung 15, sowie weiterhin zwei zu ihr koaxiale Ringräume 16 und 17 gebildet sind, denen ebenfalls in an sich bekannter Weise das Material der drei Schichten zugeführt wird.

Die Düse weist ein Wegeventil 18 auf, dessen Ventilkörper so ausgebildet ist, daß die von den nicht dargestellten Plastifizieraggregaten für die thermoplastischen Materialien a und b kommenden Masseströme über Kreuz geschaltet werden können, so daß in dem einen Fall die Komponente a dem zentralen Kanal und die Komponente b dem äußeren Ringraum bzw. umgekehrt zugeführt werden.

Durch dieses Umschalten wird in einfacher Weise der Aufbau des axial geschichteten Massestroms gemäß den Figuren 2 und 3 erzielt.

Es liegt im Rahmen der Erfindung, mit mehr als drei Plastifizier- und Einspritzaggregaten Behälter mit einer größeren Anzahl von in sich geschlos-senen Schichten herzustellen.

**Ansprüche**

1. Verfahren zum Herstellen von Behältern für Lebensmittel u. dgl., wobei die Behälter mehrere Schichten aus thermoplastischem Kunststoffmaterial aufweisen, die Innenwandung und die Außenwandung eine in sich geschlossene äußere Hülle aus nur einem thermoplastischen Kunststoffmaterial und die weiteren, mindestens eine Kleberund/oder Sperrschicht aufweisenden Schichten einen Kern mit mindestens einer in sich geschlossenen Hülle bilden, dadurch gekennzeichnet, daß das thermoplastische Kunststof fmaterial für die Schichten plastifiziert und ein plastifizierter Massestrang mit koaxialem Schichtaufbau gebildet wird, daß zu Beginn der Einspritzphase das die äußere Hülle bildende thermoplastische Kunststoffmaterial des plastifizierten Massestrangs dem thermoplastischem Kunststoffmaterial für die zu bildende Hülle des Kerns und dieses dem plastifizierten Material des Kerns voreilt und daß gegen Ende der Einspritzphase das die äußere, Hülle bildende ther-moplastische Kunstoffmaterial dem thermoplasti-schen Kunststoffmaterial der zu bildenden Hülle des Kerns und dieses dem thermoplastischen Kunststoffmaterial für den Kern nacheilt.

2. Verfahren nach Anspruch 1,
dadurch gekennzeichnet,
daß die Dicke der zu bildenden in sich geschlossenen Hülle mittels des Massedurchsatzes des plastifizierten Materials für die Hülle und mittels des Masedurchsatzes für den Kern gesteuert wird.

3.Verfahren nach Anspruch 1 oder 2,
dadurch gekennzeichnet,
daß die Änderung des Massedurchsatzes für die Hülle und die Änderung des Massedurchsatzes für den Kern durch die Steuerung der Spritzgeschwindigkeiten erfolgt.

4.Verfahren nach Anspruch 2 oder 3,
dadurch gekennzeichnet,
daß zur Erzeugung einer im wesentlichen gleichen Wandstärke der äußeren Hülle im Bereich der Innenwandung und im Bereich der Außenwandung das plastifizierte thermoplastische Kunststoffmaterial für die äußere Hülle die äußere Schicht des koaxial geschichteten Massestranges bildet.

5. Verfahren- nach-Anspruch 1, 2 oder 3,
dadurch gekennzeichnet,
daß zur Erzeugung einer dickeren Wandstärke im Bereich der Innenwandung des Behälters im Vergleich zu seiner Außenwandung, die von der äußeren Hülle gebildet werden, das plastifizierte thermoplastische Kunststoffmaterial für die äußere Hülle den axialen zentrischen Strang des koaxial geschichteten Massestranges bildet.

6. Verfahren nach einem der Ansprüche 1 bis 5,
dadurch gekennzeichnet,
daß die Aufeinanderfolge der in sich geschlossenen Schichten durch die Vorgabe der Reihenfolge der zu Beginn der Einspritzphase zueinander voreilenden Masseströme und gegen Ende der Einspritzphasen zueinander nacheilenden Masseströme des geschichteten Massestrangs mit koaxialen Schichtaufbau erfolgt.

7. Verfahren nach einem der Ansprüche 1 - 6,
dadurch gekennzeichnet,
daß während des Formfüllens nach oder vor Abschluß des voreilenden Materials auch Gleichzeitigkeitsphasen vor handen sind, wo alle Komponenten gemeinsam eingespritzt werden.

8. Vorrichtung zur Durchführung des Verfahrens nach einem der Ansprüche 1 bis 7, mit einer Düse, die eine axiale Bohrung und koaxiale Ringräume aufweist,
dadurch gekennzeichnet,
daß die Vorrichtung eine Einrichtung zur Änderung der Aufeinanderfolge der einzelnen Masseströme des gesc hichteten Massestranges aufweist.

9. Vorrichtung nach Anspruch 8,
dadurch gekennzeichnet,
daß die Einrichtung ein Richtungs- bzw. Umschaltventil ist.

Fig 1a

Fig 1b

Fig 2a

Fig 2b

Fig 2c

Fig 2d

Fig 3 a

Fig 3b

# Fig 4